# EUROPEAN PATENT SPECIFICATION

(11) **EP 3 667 051 B1**
(45) Date of publication and mention of the grant of the patent: **08.02.2023**
(21) Application number: 18306694.3
(22) Date of filing: 14.12.2018
(51) Int. Cl.: F02K 1/70, F02K 1/76

(54) **TURBOFAN ENGINE COMPRISING A THRUST REVERSER UNIT WITH TILTING BEAMS**
TURBOFANTRIEBWERK MIT EINER SCHUBUMKEHREINHEIT MIT DREHBAREN TRÄGERN
MOTEUR À TURBORÉACTEUR COMPRENANT UNE UNITÉ D'INVERSEUR DE POUSSÉE AVEC DES POUTRELLES ROTATIVES

(43) Date of publication of application: 17.06.2020
(73) Proprietor: Airbus Operations GmbH, 21129 Hamburg (DE); Airbus Operations (S.A.S.), 31060 Toulouse Cedex 9 (FR)
(72) Inventor: GARDES, Pascal, 31530 LEVIGNAC (FR); RIDRAY, Frédéric, 32600 L'ISLE JOURDAIN (FR); ANDREANI, Luc, 28325 BREMEN (DE)
(74) Representative: Cabinet Le Guen Maillet

(56) References cited:
- US-A- 3 612 401
- US-A- 3 764 096
- US-A1- 2004 068 978

## Description

### TECHNICAL FIELD

The present invention relates to a turbofan engine comprising a thrust reverser unit with at least one tilting beam, and to an aircraft comprising at least one such turbofan engine.

### RELATED ART

An aircraft comprises at least one turbofan engine comprising a nacelle and a motor housed in the nacelle. The turbofan engine is suspended from a pylon attached beneath a wing of the aircraft. A bypass air flow is guided through a bypass channel between the motor and the nacelle, and flows from the front to the back of the nacelle through the fan.

To create a reverse thrust when the aircraft is landing, the nacelle comprises a thrust reverser unit, which guides the bypass air flow from the bypass channel to outside of the nacelle, and directs the bypass air flow forward.

The thrust reverser unit comprises external doors articulated on the structure of the nacelle. Each external door moves from a stocked position to a deployed position. In the stocked position, the external door is arranged inside the nacelle. In the deployed position, the external door is oriented outward.

The thrust reverser unit comprises also internal doors articulated on the structure of the nacelle. Each internal door moves from a stocked position to a deployed position. In the stocked position, the internal door is arranged inside the nacelle. In the deployed position, the internal door is oriented through the motor and is inside the bypass channel.

In the deployed position, the bypass air flow is deviated by the internal doors and the external doors to direct the bypass air flow forward.

The thrust reverser unit comprises also a mechanism to move the doors. The known mechanisms are relatively complicated and heavy.

Documents US 3,612,401 and US 3,764,096 disclose prior art turbofan engines with thrust reverser units.

### SUMMARY OF THE INVENTION

One object of the present invention is to propose a turbofan engine comprising a thrust reverser unit which is simpler and lighter than the known thrust reverser units.

To that end, what is proposed is a turbofan engine comprising a motor and a nacelle disposed around said motor to define between the motor and the nacelle, a bypass channel for a bypass air flow, wherein the turbofan engine comprises at least one thrust reverser unit, wherein each thrust reverser unit comprises:
- a fixed structure,
- an external door mobile in rotation on the fixed structure around an external hinge axis arranged at the back of the external door, and
- an internal door opposite to the external door mobile in rotation on the fixed structure around an internal hinge axis arranged at the back of the internal door,

each door being mobile between a stocked position and a deployed position where a front edge of the external door is projected outward, and where a front edge of the internal door is oriented toward the motor, to open a window between the bypass channel and outside the nacelle,
where for each pair comprising an external and an internal door, the turbofan engine comprises a mechanism arranged to move the doors from the stocked position to the deployed position and vice versa and where the mechanism comprises:
   - at least one beam articulated on the fixed structure around a main axis,
   - for each beam, an external rod articulated by one end to the beam and by the other end to the external door,
   - for each beam, an internal rod articulated by one end to the beam and by the other end to the internal door, and
   - an actuator moving the beam around the main axis.

Such a thrust reverser unit comprises a simple mechanism to move the doors.

According to a particular embodiment, the actuator is articulated by one end to the fixed structure and by another end to said at least one beam.

According to a particular embodiment, the actuator is articulated by one end to the fixed structure and by another end to the external door.

According to a particular embodiment, the actuator is articulated by one end to the fixed structure and by another end to the internal door.

The invention also proposes an aircraft comprising a pylon below which is attached to a nacelle according to one of the preceding variants.

### BRIEF DESCRIPTION OF THE DRAWINGS

The above-mentioned features of the invention, as well as others, will emerge more clearly upon reading the following description of an exemplary embodiment, said description being given with reference to the appended drawings, in which:
Fig. 1 shows a side view of an aircraft having a thrust reverser unit according to the invention,
Fig. 2 shows a side view of the thrust reverser unit according to a first embodiment in a stocked position,
Fig. 3 shows a side view of the thrust reverser unit according to the first embodiment in a deployed position,
Fig. 4 shows a perspective view of a thrust reverser unit according to the first embodiment of the invention, and
Fig. 5 shows a perspective view of a thrust reverser unit according to a second embodiment of the invention.

### DETAILED DESCRIPTION OF EMBODIMENTS

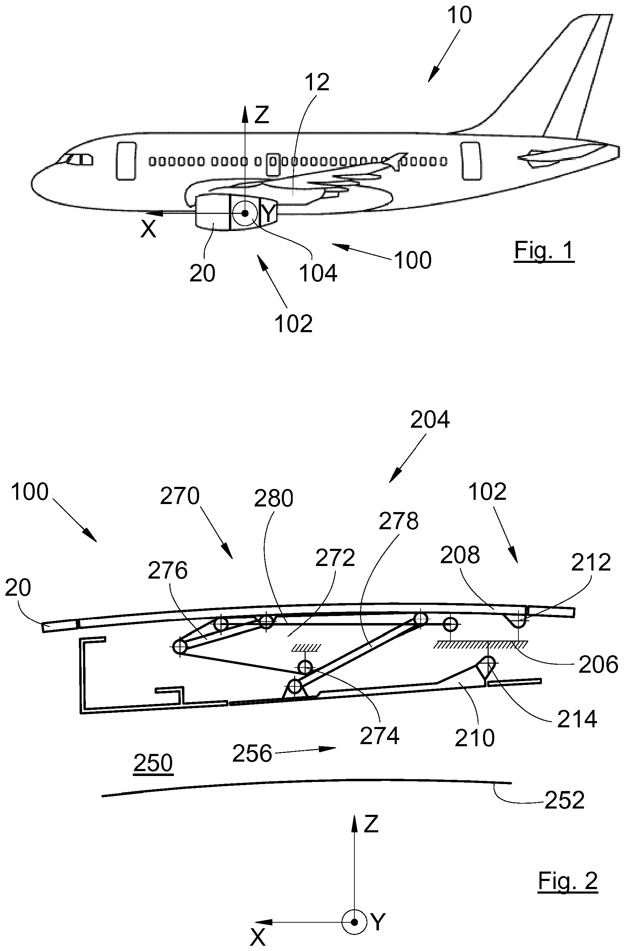

Fig. 1 shows an aircraft 10 which comprises at least two turbofan engines 100, of which only one is visible in Fig. 1 and is essentially cylindrical in shape. Each turbofan engine 100 is attached below a pylon 12 of said aircraft 10.

In the description that follows, and as is conventional, the X axis is the longitudinal axis of the turbofan engine 100, with positive orientation in the direction of advance of the aircraft 10, the Y axis is the transverse axis of the turbofan engine 100 and is horizontal when the aircraft is on the ground, the Z axis is the vertical axis or vertical height when the aircraft is on the ground, these three directions X, Y and Z are mutually orthogonal. The terms relating to a position are considered with reference to an aircraft 10 in a normal advancing position of use, as shown in Fig. 1.

The turbofan engine 100 comprises a motor and a nacelle 102 installed around the motor. The nacelle 102 comprises a fan cowl 20 which covers a fan set in front of the motor and a thrust reverser unit 104 installed behind the fan cowl 20.

As for the turbofan engine of the prior art, the turbofan engine 100 comprises a bypass channel between the motor and the nacelle 102, in which a bypass air flow is guided and flows from the front to the back of the nacelle 102 through the fan.

According to the size of the turbofan engine 100, several thrust reverser units 104 can be installed. For each thrust reverser unit 104, the nacelle 102 comprises a window between the bypass channel and outside the nacelle 102.

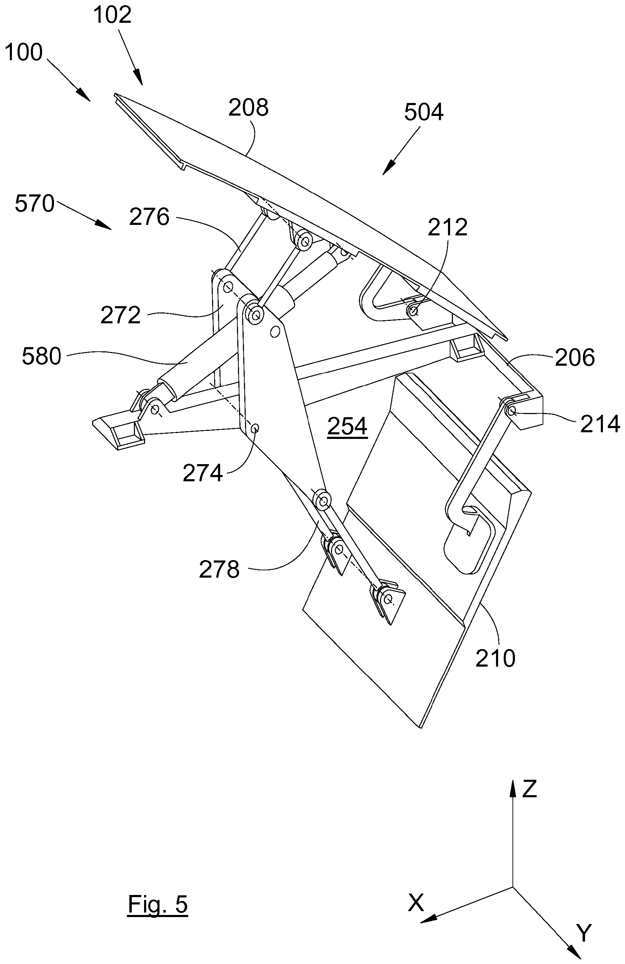

Fig. 2, Fig. 3 and Fig. 4 show a thrust reverser unit 204 according to a first embodiment of the invention. Fig. 5 shows a thrust reverser unit 504 according to a second embodiment of the invention.

The thrust reverser unit 204, 504 comprises a fixed structure 206 which is fixed on a structure of the nacelle 102.

The thrust reverser unit 204, 504 comprises also an external door 208 and an internal door 210 opposite to the external door 208.

The external door 208 is mobile in rotation on the fixed structure 206 around an external hinge axis 212 and the internal door 210 is mobile in rotation on the fixed structure 206 around an internal hinge axis 214. Each hinge axis 212, 214 is arranged at the back of the associated doors 208, 210.

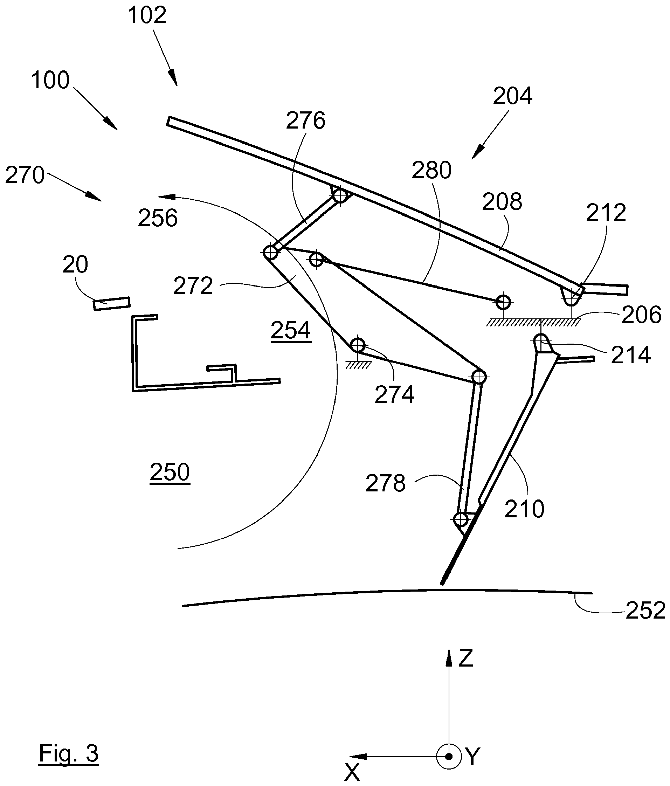

Each door 208, 210 is mobile between a stocked position (Fig. 2) and a deployed position (Fig. 3).

In the stocked position, the external door 208 is arranged around the nacelle 102 to realize an external aerodynamic surface with the fan cowl 20. In the deployed position, the external door 208 is oriented outward and the front edge of the external door 208 is projected outward far from the nacelle 102, i.e. far from the fan cowl 20.

In the stocked position, the internal door 210 is arranged inside the nacelle 102 to realize an internal aerodynamic surface delimiting the bypass channel 250. In the deployed position, the front edge of the internal door 210 is oriented toward the motor 252 and the internal door 210 is inside the bypass channel 250.

When the doors 208 and 210 are in the deployed position, the window 254 is open and the bypass air flow 256 flows from the bypass channel 250 to outside the nacelle 102.

For each pair comprising an external and an internal door 208, 210, the thrust reverser unit 204, 504 comprises a mechanism 270, 570 arranged to move the doors 208, 210 from the stocked position to the deployed position and vice versa.

The mechanism 270, 570 comprises at least one beam 272 which is mounted articulated on the fixed structure 206 around a main axis 274 mainly parallel to the hinge axis 212, 214.

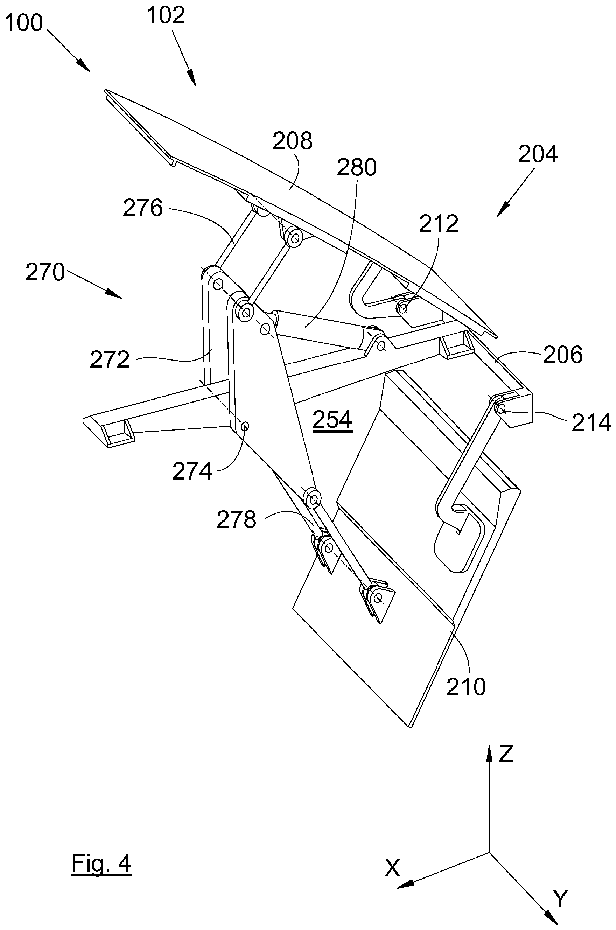

In the embodiments shown on Figs. 4 and 5, there are two beams 272 for each pair of doors 208, 210. The first beam 272 of the two is arranged to drive the starboard side of each door 208, 210, and the second beam is arranged to drive the port side of each door 208, 210.

The beam 272 is disposed between the external door 208 and the internal door 210.

For each beam 272, the mechanism 270, 570 comprises an external rod 276 articulated by one end to the beam 272 and by the other end to the external door 208.

For each beam 272, the mechanism 270, 570 comprises an internal rod 278 articulated by one end to the beam 272 and by the other end to the internal door 210.

When each beam 272 is turned around the main axis 274 in a first direction, from a first position to a second position, each rod 276, 278 moves the associated door 208, 210 from its stocked position to its deployed position, and when each beam 272 is turned around the main axis 274 in a second direction opposite to the first direction, from the second position to the first position, each rod 276, 278 moves the associated door 208, 210 from its deployed position to its stocked position.

The mechanism 270, 570 comprises also an actuator 280, 580 which moves the beam 272 alternatively from the first position to the second position and from the second position to the first position.

In the first embodiment, the actuator 280 is articulated by one end to the fixed structure 206 and by another end to said at least one beam 272. In the current embodiment, the actuator 280 is fixed to the two beams 272 through a common shaft.

In the second embodiment, the actuator 580 is articulated by one end to the fixed structure 206 and by another end to the external door 208.

In a third embodiment (not shown), the actuator is articulated by one end to the fixed structure 206 and by another end to the internal door 210.

In the embodiments shown on Figs. 4 and 5, the fixed structure 206 takes the form of a beam parallel to the longitudinal axis X.

## Claims

1. Turbofan engine (100) comprising a motor (252) and a nacelle (102) disposed around said motor (252) to define between the motor (252) and the nacelle (102), a bypass channel (250) for a bypass air flow (256), wherein the turbofan engine (100) comprises at least one thrust reverser unit (104, 204, 504), wherein each thrust reverser unit (104, 204, 504) comprises:
- a fixed structure (206),
- an external door (208) mobile in rotation on the fixed structure (206) around an external hinge axis (212) arranged at the back of the external door (208), and
- an internal door (210) opposite to the external door (208) mobile in rotation on the fixed structure (206) around an internal hinge axis (214) arranged at the back of the internal door (210),
each door (208, 210) being mobile between a stocked position and a deployed position where a front edge of the external door (208) is projected outward, and where a front edge of the internal door (210) is oriented toward the motor (252), to open a window (254) between the bypass channel (250) and outside the nacelle (102),
where for each pair comprising an external and an internal door (208, 210), the turbofan engine (100) comprises a mechanism (270, 570) arranged to move the doors (208, 210) from the stocked position to the deployed position and vice versa and where the mechanism (270, 570) comprises:
- at least one beam (272) articulated on the fixed structure (206) around a main axis (274),
- for each beam (272), an external rod (276) articulated by one end to the beam (272) and by the other end to the external door (208), and
- an actuator (280, 580) moving the beam (272) around the main axis (274), **characterised in that** the mechanism (270, 570) comprises
for each beam (272), an internal rod (278) articulated by one end to the beam (272) and by the other end to the internal door (210).

2. Turbofan engine (100) according to claim 1, wherein the actuator (280) is articulated by one end to the fixed structure (206) and by another end to said at least one beam (272).

3. Turbofan engine (100) according to claim 1, wherein the actuator (580) is articulated by one end to the fixed structure (206) and by another end to the external door (208).

4. Turbofan engine (100) according to claim 1, wherein the actuator is articulated by one end to the fixed structure (206) and by another end to the internal door (210).

5. Aircraft comprising a pylon (12) below which is attached a turbofan engine (100) according to one of the preceding claims.

## Patentansprüche

1. Turbofantriebwerk (100), umfassend einen Motor (252) und eine Gondel (102), die um den Motor (252) herum angeordnet ist, um zwischen dem Motor (252) und der Gondel (102) einen Umgehungskanal (250) für einen Umgehungsluftstrom (256) zu definieren, wobei das Turbofantriebwerk (100) wenigstens eine Schubumkehreinheit (104, 204, 504) umfasst, wobei jede Schubumkehreinheit (104, 204, 504) umfasst:
- eine feststehende Struktur (206),
- eine äußere Tür (208), die auf der feststehenden Struktur (206) um eine äußere Schwenkachse (212), die an der Hinterseite der äußeren Tür (208) angeordnet ist, drehbewegbar ist, und
- eine innere Tür (210) gegenüber der äußeren Tür (208), die auf der feststehenden Struktur (206) um eine innere Schwenkachse (214), die an der Hinterseite der inneren Tür (210) angeordnet ist, drehbewegbar ist,
wobei jede Tür (208, 210) zwischen einer Verstauposition und einer Einsatzposition, in der eine Vorderkante der äußeren Tür (208) nach außen vorsteht und in der eine Vorderkante der inneren Tür (210) hin zu dem Motor (252) ausgerichtet ist, bewegbar ist, um ein Fenster (254) zwischen dem Umgehungskanal (250) und der Umgebung der Gondel (102) zu öffnen,
wobei für jedes eine äußere und eine innere Tür (208, 210) umfassende Paar das Turbofantriebwerk (100) einen Mechanismus (270, 570) umfasst, der dazu eingerichtet ist, die Türen (208, 210) aus der Verstauposition in die Einsatzposition und umgekehrt zu bewegen, und wobei der Mechanismus (270, 570) umfasst:
- wenigstens einen Träger (272), der um eine Hauptachse (274) an der feststehenden Struktur (206) angelenkt ist,
- für jeden Träger (272) eine äußere Stange (276), die mit einem Ende an dem Träger (272) und mit dem anderen Ende an der äußeren Tür (208) angelenkt ist, und
- einen Aktuator (280, 580), der den Träger (272) um die Hauptachse (274) bewegt,
**dadurch gekennzeichnet, dass** der Mechanismus (270, 570) für jeden Träger (272) eine innere Stange (278) umfasst, die mit einem Ende an dem Träger (272) und mit dem anderen Ende an der inneren Tür (210) angelenkt ist.

2. Turbofantriebwerk (100) nach Anspruch 1, wobei der Aktuator (280) mit einem Ende an der feststehenden Struktur (206) und mit einem anderen Ende an dem wenigstens einen Träger (272) angelenkt ist.

3. Turbofantriebwerk (100) nach Anspruch 1, wobei der Aktuator (580) mit einem Ende an der feststehenden Struktur (206) und mit einem anderen Ende an der äußeren Tür (208) angelenkt ist.

4. Turbofantriebwerk (100) nach Anspruch 1, wobei der Aktuator mit einem Ende an der feststehenden Struktur (206) und mit einem anderen Ende an der inneren Tür (210) angelenkt ist.

5. Luftfahrzeug, das eine Triebwerksstrebe (12) umfasst, unter der ein Turbofantriebwerk (100) nach einem der vorangehenden Ansprüche befestigt ist.

## Revendications

1. Turboréacteur à double flux (100), comprenant un moteur (252) et une nacelle (102) disposée autour dudit moteur (252) pour définir, entre le moteur (252) et la nacelle (102), un canal de dérivation (250) pour un écoulement d'air de dérivation (256), dans lequel le turboréacteur à double flux (100) comprend au moins une unité d'inversion de poussée (104, 204, 504), dans lequel chaque unité d'inversion de poussée (104, 204, 504) comprend :
- une structure fixe (206),
- une trappe externe (208) mobile en rotation sur la structure fixe (206) autour d'un axe charnière externe (212) agencé à l'arrière de la trappe externe (208), et
- une trappe interne (210), en face de la trappe externe (208), mobile en rotation sur la structure fixe (206) autour d'un axe charnière interne (214) agencé à l'arrière de la trappe interne (210),
chaque trappe (208, 210) étant mobile entre une position escamotée et une position déployée où un bord avant de la trappe externe (208) est projeté vers l'extérieur, et où un bord avant de la trappe interne (210) est orienté vers le moteur (252), pour ouvrir une fenêtre (254) entre le canal de dérivation (250) et l'extérieur de la nacelle (102),
où, pour chaque paire comprenant une trappe externe et une trappe interne (208, 210), le turboréacteur à double flux (100) comprend un mécanisme (270, 570) agencé pour déplacer les trappes (208, 210), de la position escamotée à la position déployée et vice versa, et où le mécanisme (270, 570) comprend :
- au moins une poutrelle (272) articulée sur la structure fixe (206) autour d'un axe principal (274),
- pour chaque poutrelle (272), une tige externe (276) articulée, par une extrémité, sur la poutrelle (272) et, par l'autre extrémité, sur la trappe externe (208),
- un actionneur (280, 580) déplaçant la poutrelle (272) autour de l'axe principal (274), **caractérisé en ce que** le mécanisme (270, 570) comprend
pour chaque poutrelle (272), une tige interne (278) articulée, par une extrémité, sur la poutrelle (272) et, par l'autre extrémité, sur la trappe interne (210).

2. Turboréacteur à double flux (100) selon la revendication 1, dans lequel l'actionneur (280) est articulé, par une extrémité, sur la structure fixe (206) et, par une autre extrémité, sur ladite au moins une poutrelle (272).

3. Turboréacteur à double flux (100) selon la revendication 1, dans lequel l'actionneur (580) est articulé, par une extrémité, sur la structure fixe (206) et, par une autre extrémité, sur la trappe externe (208).

4. Turboréacteur à double flux (100) selon la revendication 1, dans lequel l'actionneur est articulé, par une extrémité, sur la structure fixe (206) et, par une autre extrémité, sur la trappe interne (210).

5. Aéronef, comprenant un mât (12) sous lequel est assemblé un turboréacteur à double flux (100) selon l'une des revendications précédentes.
